# EUROPÄISCHE PATENTSCHRIFT

(11) **EP 2 174 560 B1**
(45) Veröffentlichungstag und Bekanntmachung des Hinweises auf die Patenterteilung: **05.10.2011**
(21) Anmeldenummer: 08166251.2
(22) Anmeldetag: 09.10.2008
(51) Int. Cl.: A23P 1/08

(54) **Düse zum Aufbringen einer Lebensmittelschicht**
Nozzle for applying a food coating
Buse d'application d'une couche d'aliment

(43) Veröffentlichungstag der Anmeldung: 14.04.2010
(73) Patentinhaber: FRoSTA Aktiengesellschaft, 27533 Bremerhaven (DE)
(72) Erfinder: Buschmann, Urban, 31535 Neustadt (DE)
(74) Vertreter: Raffay & Fleck

(56) Entgegenhaltungen:
- US-A- 2 941 544
- US-A- 3 868 048
- US-A- 6 001 404
- US-A1- 2004 118 948

## Beschreibung

Die vorliegende Erfindung betrifft eine Düse zum Aufbringen einer Lebensmittelschicht mit einer Austrittsöffnung sowie die Verwendung einer solchen Düse zum Aufbringen einer fließ- bzw. pumpfähigen Lebensmittelschicht.

Solche Düsen und deren Verwendung zum Aufbringen einer Lebensmittelschicht, wie beispielsweise Saucen auf Fleischstücke sind aus dem Stand der Technik bekannt. Die bekannten Düsen weisen eine in ihrer Breite und ihrem Anstellwinkel verstellbare steife Öffnung auf, die an die Größe der jeweilig mit einer Lebensmittelschicht zu versehenen Unterlage angepasst werden kann.

Sollen aber nicht nur Lebensmittelschichten ohne größere Stücke aufgebracht werden, sondern auch Lebensmittelschichten, die beispielsweise größere Gemüsestücke enthalten, verstopfen die vorbekannten Düsen durch die zu großen Lebensmittelstücke. Alternativ können die größeren Stücke vorher zerkleinert werden, was allerdings die Optik des Endproduktes negativ beeinflusst. Desweiteren besteht die Gefahr des Zerquetschens der Stücke.

Aus der US - 2004/0118948 - A1 ist eine Düse mit flexiblen Membraklappen bekannt. Als Alternative ist es bekannt, die aufzubringende Lebensmittelschicht vorher tief zu frieren und durch Formen aus einem Block auszustanzen und das ausgestanzte Stück später auf die Unterlage aufzulegen. Es ist auch möglich dies in-line ohne zu frieren durchzuführen. Allerdings ist dieses Verfahren deutlich aufwendiger und führt ebenfalls zur Zerstörung der eingesetzten Lebensmittelstücke.

Somit ist es Aufgabe dieser Erfindung, eine Düse anzugeben, die es ermöglicht Lebensmittelschichten mit Stücken unterschiedlicher Größe aufzubringen.

Die Aufgabe wird gelöst durch eine Düse gemäß Anspruch 1 . Eine solche Düse weist eine Austrittsöffnung auf, die in ihren Abmessungen ganz, teil- oder stückweise flexibel ausgebildet ist.

Eine Düse ist im Verständnis dieser Patentanmeldung eine Vorrichtung, die eine Austrittsöffnung mit einer zumindest weitestgehend geschlossenen Umrandung aufweist. Diese Umrandung definiert somit die Austrittsöffnung. Sie kann verschiedenste Formen aufweisen. Zu nennen sind hier beispielweise viereckige, sternförmige und/oder runde Querschnitte.

Eine erfindungsgemäße Düse weist somit gemäß Abschnitt 1 ebenfalls eine solche Ausrittsöffnung auf, die aber so gestaltet ist, dass ihr Umrandung zumindest teilweise oder stückweise bzw. ganz flexibel gestaltet ist. Eine solche Flexibilität kann auf verschiedenste Arten erreicht werden. Zum einen können als Teil der Umrandung der Austrittsöffnung gegeneinander bewegliche Teile vorgesehen werden. Zum anderen ist es beispielsweise auch möglich in sich flexible Abschnitte als Teil der Umrandung vorzusehen.

Durch eine solche Ausgestaltung der Austrittsöffnung wird es ermöglicht, dass sich die Austrittsöffnung dynamisch verformen und so an die durch sie hindurch tretenden Stücke anpassen kann. Dies ermöglicht es, beispielsweise in Gemüsesaucen enthaltene Gemüsestücke unverändert und ohne das Risiko einer Verstopfung mit der Düse aufzubringen. Desweiteren ermöglicht diese Art der Austrittsöffnung auch teilweise noch gefrorene, also fest zusammen gefrorene Stücke enthaltende, fließ- beziehungsweise pumpfähige Lebensmittelschichten aufzubringen.

Vorteilhafterweise kann eine Düse gemäß Anspruch 2 eine Austrittsöffnung aufweisen, deren Umrandung mindestens teilweise durch mindestens ein Gegendruckelement gebildet wird, das in der Ebene der Austrittsöffnung bewegbar ist und mit einer Rückstellkraft beaufschlagt ist, durch die das Gegendruckelement in eine Nullstellung zurückgedrängt wird.

Bei einer solchen Ausgestaltung der erfindungsgemäßen Düse wird die Flexibilität durch die Bewegbarkeit des mindestens einen Gegendruckelements gebildet. Da das Gegendruckelement zumindest auch innerhalb der Ebene der Austrittsöffnung bewegbar ist, kann dadurch die Austrittsöffnung ausgehend von einer Nullstellung vergrößert bzw. verkleinert werden. Zu einer solchen Vergrößerung und/oder Verkleinerung ist jedoch eine Kraft notwendig, um die Rückstellkraft, die an dem Gegendruckelement angreift, zu überwinden. Eine solche Rückstellkraft ist vorteilhaft, da dadurch prinzipiell eine definierte Austrittsöffnungsform vorgegeben wird, die sich nur dann dynamisch verändert, wenn dies aufgrund der durch sie hindurch tretenden Stücke notwendig ist.

Bei einer solchen Ausführung wird das Gegendruckelement in der Regel so an die restliche Umrandung der Austrittsöffnung angeschlossen, dass auch dann, wenn das Gegendruckelement aus der Nullstellung heraus ausgelenkt ist, eine zumindest im Wesentlichen geschlossene Umrandung vorliegt. Dadurch kann verhindert werden, dass durch die Düse hindurch tretende Massen an ungewünschten Stellen austreten.

Es ist aber auch möglich, mehrere Gegendruckelemente vorzusehen, die beispielsweise auch benachbart sein können. Eine solche Verwendung von mehreren Gegendruckelementen hat gegenüber der Verwendung eines einzigen Gegendruckelements den Vorteil, dass sich die Form der Austrittsöffnung genauer an die für den Durchtritt der Stücke notwendige Form anpassen kann.

Vorteilhafter Weise kann gemäß Anspruch 3 das Gegendruckelement so ausgebildet sein, dass es von der Nullstellung aus nur in einer Richtung bewegbar ist. Dies ist in der Regel insbesondere dann von Vorteil, wenn als die eine Richtung eine solche gewählt wird, dass durch die Bewegung des Gegendruckelementes aus der Nullstellung heraus die Austrittsöffnung an der Stelle des Gegendruckelementes vergrößert wird.

Vorteilhafter Weise kann die Rückstellkraft gemäß Anspruch 4 verstellt werden. Um die Rückstellkraft verstellbar auszuführen, bieten sich dem Fachmann zahlreiche Möglichkeiten. So können beispielsweise Federelemente vorgesehen werden, deren Stauchung oder Streckung in der Nullstellung beispielsweise durch Stellschrauben verändert werden kann. Eine-solche Verstellbarkeit der Rückstellkraft ermöglicht es, die Düse an verschiedene Anforderungen auf einfache Weise anzupassen.

Erfindungsgemäß ist vorgesehen, die Umrandung der Austrittsöffnung zumindest teilweise durch eine flexible Membran auszubilden.

Durch eine solche flexible Membran wird die Austrittsöffnung in ihren Abmessungen ganz, teil- oder stückweise flexibel gestaltet. Eine solche Membran hat den Vorteil, dass die Formveränderung der Austrittsöffnung in geschwungeren Linien erfolgt, als dies der Fall wäre, wenn lediglich eckige, gegeneinander verschiebbare Gegendruckelemente vorgesehen wären. Desweiteren kann eine solche Membran den Vorteil mitbringen, dass auf einfache Weise eine in der Fläche konstante, in der Form aber veränderbare Austrittsöffnung geschaffen wird.

Auch ermöglicht es eine solche Membran, auf Abdichtungen zwischen restlicher Umrandung und beweglichen Gegendruckelementen zu verzichten.

Die membran ist dabei dehnbar. Eine solche dehnbare Membran hat den Vorteil, dass eine Größenveränderung an einer Stelle der Austrittsöffnung nicht unbedingt eine Verkleinerung an einer Stelle nach sich zieht, da der Umfang der Austrittsöffnung aufgrund der Dehnbarkeit der Membran veränderlich ist. Desweiteren kann eine solche dehnbare Membran in der Regel schneller und dynamischer auf unterschiedlich große durchtretende Stücke reagieren und die Formänderung somit schneller und dynamischer durchführen.

Besonders geeignet kann eine Silikonmembran sein. Der Einsatz einer solchen Silikonmembran bietet sich insbesondere dann an, wenn auf einfache Weise eine Lebensmittelechtheit gewährleistet sein soll.

Vorteilhafter Weise kann die Austrittsöffnung gemäß Ansprüchen 5 ihrer Ruhegröße und ihrer Ruheform verstellbar sein. Unter Ruhegrößer bzw. Ruheform versteht sich hierbei die Größe bzw. Form der Austrittsöffnung, die sei einnimmt, wenn kein Material durch sie hindurch tritt. Eine solche Ruhegröße oder Ruheform ist dann nicht eindeutig definiert, wenn beispielsweise eine Membran eingesetzt wird, die so groß gewählt wird, dass sich die Form und/oder Größe der Austrittsöffnung je nach Orientierung der Düse verändert. In einem solchen Fall ist eine durchschnittliche bzw. lageabhängige Ruhegröße und/oder Ruheform heranzuziehen.

Die Verstellbarkeit der Ruhegröße und/oder der Ruheform kann beispielsweise dadurch erreicht werden, dass Zwischenlegelemente vorhanden sind, die bei Bedarf entfernt oder hinzugefügt werden können. Andere Möglichkeiten die beispielsweise die Verstellung der Ruhegröße durch Verschieben einzelner ineinander greifender Elemente gegeneinander, die die Umrandung der Austrittsöffnung bilden, sind dem Fachmann bekannt.

Eine solche veränderbare Austrittsöffnung weist insbesondere dann Vorteile auf, wenn die Düse für verschiedene Zwecke bzw. zum Auftragen von unterschiedlichen Lebensmittelschichten oder Lebensmittelschichten auf unterschiedliche Auflagen verwendet werden soll.

Je nach Anwendungsfall kann es vorteilhaft sein, die Ausrittsöffnung gemäß Anspruch 6 so auszubilden, dass sie in ihrer Ruheform einen rechteckigen Querschnitt aufweist.

Darunter ist nicht unbedingt eine komplett rechtwinklige Querschnittsanordnung zu verstehen. Vielmehr kann es durchaus vorteilhaft sein, die Kanten des rechteckigen Querschnittes abgerundet auszuführen.

Eine solche Abrundung bringt den Vorteil mit sich, dass die Lebensmittelsicht, die mit der Düse aufgetragen wird keine Ecken und Kanten aufweist, sondern durch abgerundete Kanten stabiler ist und eleganter aussieht.

Als besonders vorteilhaft hat sich eine Düse gemäß Absatz 7 herausgestellt, bei der die Austrittsöffnung in ihrer Ruheform einen n-eckigen Querschnitt aufweist, insbesondere einen viereckigen Querschnitt, wobei zwischen den n-Ecken n-Kanten vorhanden sind und wobei n-1 Kanten durch Kanten steifer Platten gebildet werden und die verbleibende Kante durch eine insbesondere dehnbare, flexible Membran gebildet wird. Eine solche Düsenform kann insbesondere dann vorteilhaft eingesetzt werden, wenn eine Schicht auf eine ebene Unterlage aufgebracht werden soll. Dann bildet beispielsweise eine Kante einer steifen Platte eine untere Kante der Austrittsöffnung und schließen sich daran ebenfalls durch steife Platten gebildete Kanten der Austrittsöffnung an, die sich nach oben erstrecken. Die obere Kante kann dabei dann durch eine, insbesondere dehnbare, flexible Membran gebildet werden. Dadurch kann gewährleistet werden, dass die aufzubringende Lebensmittelschicht bündig mit der Unterlage abschließt und die Stücke größerer Größe nach oben aus der Lebensmittelschicht herausragen.

Als besonders vorteilhaft hat sich in anderen Anwendungsfällen eine Düse gemäß Absatz 8 herausgestellt, bei der die Austrittsöffnung in ihrer Ruheform einen runden Querschnitt aufweist. Auch ovale Querschnitte sind möglich. Dabei wird ein erster Kreis- oder Ovalabschnitt des Querschnitts durch feste Elemente, wie beispielsweise ein aufgesägtes Rohr, und der verbleibende Kreis- oder Ovalabschnitt durch eine insbesondere dehnbare, flexible Membran gebildet.

Erfindungsgemäß weist die Düse eine flexible Membran auf und verfügt desweiteren über mindestens ein Gegendruckelement, das außerhalb der Austrittsöffnung angeordnet ist und mit Rückstellkraft beaufschlagt ist, so dass es von einer Nullstellung aus von der Austrittsöffnung in einer Richtung innerhalb der Ebene der Ausrittsöffnung weg verschiebbar ist.

Eine solche Kombination von Membran und Gegendruckelementen bietet den Vorteil, dass eine Abdichtung zwischen Gegendruckelement und anderen Bereichen des Umfangs der Austrittsöffnung nicht notwendig ist und eine geschwungene Führung des Umfangs der Austrittsöffnung erreicht werden kann. Dabei wird eine dehnbare Membran eingesecht.

Vorteilhafter Weise ist dabei die Rückstellkraft gemäß Anspruch 9 veränderbar.

Die Aufgabe wird ebenfalls gelöst durch die Verwendung einer erfindungsgemäßen Düse zum Aufbringen einer fließfähigen Lebensmittelschicht mit stückigen Teilen unterschiedlicher Größe und beliebiger Querschnittsform gemäß Anspruch 10.

Beim Aufbringen einer fließfähigen Lebensmittelschicht mit stückigen Teilen kommen die Vorteile einer erfindungsgemäßen Düse besonders zur Geltung, da durch eine erfindungsgemäße Düse auch stückige Teile aufgebracht werden können, ohne dass die Gefahr besteht, dass die Düse verstopft oder die stückigen Teile zerstört werden.

Weitere Vorteile werden anhand zweier Ausführungsbeispiele beschrieben. Die Ausführungsbeispiele beschränken dabei keineswegs die Erfindung, sondern geben nur weitere Vorteile und mögliche Ausführungen an. Weitere Ausführungen sind durch den Fachmann leicht auffindbar. Die rein schematischen Figuren zeigen dabei:
- Fig. 1: nicht - erfindungsgemäße Düse mit Membran;
- Fig. 2: erfindungsgemäße Düse mit dehnbarer Membran und Gegendruckble- chen im Ruhezustand;
- Fig. 3: Düse aus Fig. 2, jedoch beim Durchtritt eines Gemüsestücks;
- Fig. 4: Düse aus Fig. 2, jedoch in Ansicht von oben; und
- Fig. 5: Düse aus Fig. 2, jedoch in Ansicht von der Seite.

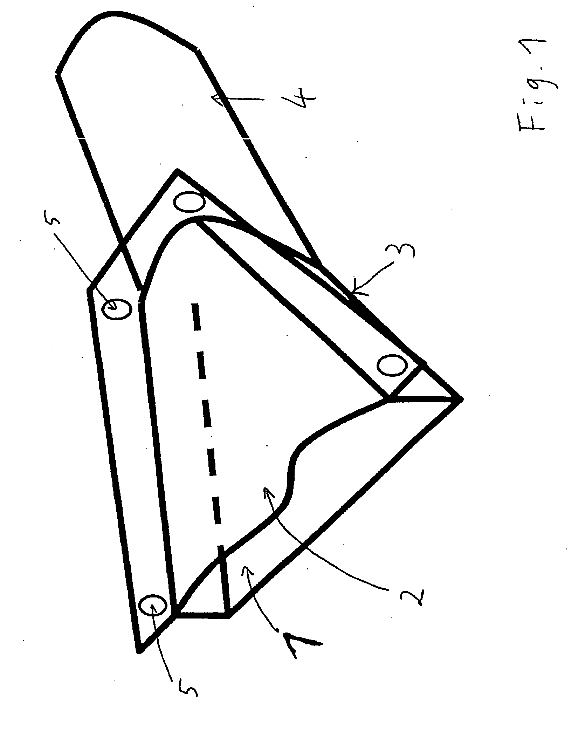

Fig. 1 zeigt ein erstes, einfaches nicht erfindungsgemäßes Ausführungsbeipiel. Die Düse wird hier gebildet durch einen Trichter 3, ein Anschlussrohr 4 sowie eine Membran 2. Die Membran 2 ist durch Verschraubungen 5 mit dem Trichter 3 verbunden. Die vordere Kante des Trichters 3 und der Membran 2 bilden die Ausrittsöffnung 1. Die aufzubringende Lebensmittelschicht wird durch das Anschlussrohr 4 in den Trichter 3 hineinbefördert. Dazu können beispielsweise Pumpen verwendet werden. Der Trichter 3 mit der Membran 2 sorgen dafür, dass die Lebensmittelschicht in eine durch die Austrittsöffnung 1 vorgegebene Form gebracht wird. Da die Membran 2 hier so groß gewählt ist, dass sie in der Ruheposition entspannt ist, wird der Durchtritt von Lebensmitteln die Membran 2 nach oben hin auswölben. Dadurch wird eine Austrittsöffnung geschaffen, die eine gerade Unterkante und gerade Seitenkanten aufweist und nach oben hin eine Wölbung zeigt.

Die hier gewählte Membran 2 ist dehnbar ausgebildet, so dass bei der Passage von großen Lebensmittelstücken eine weitere lokale Wölbung der Membran 2 möglich ist, um die Passage ungehindert zu ermöglichen.

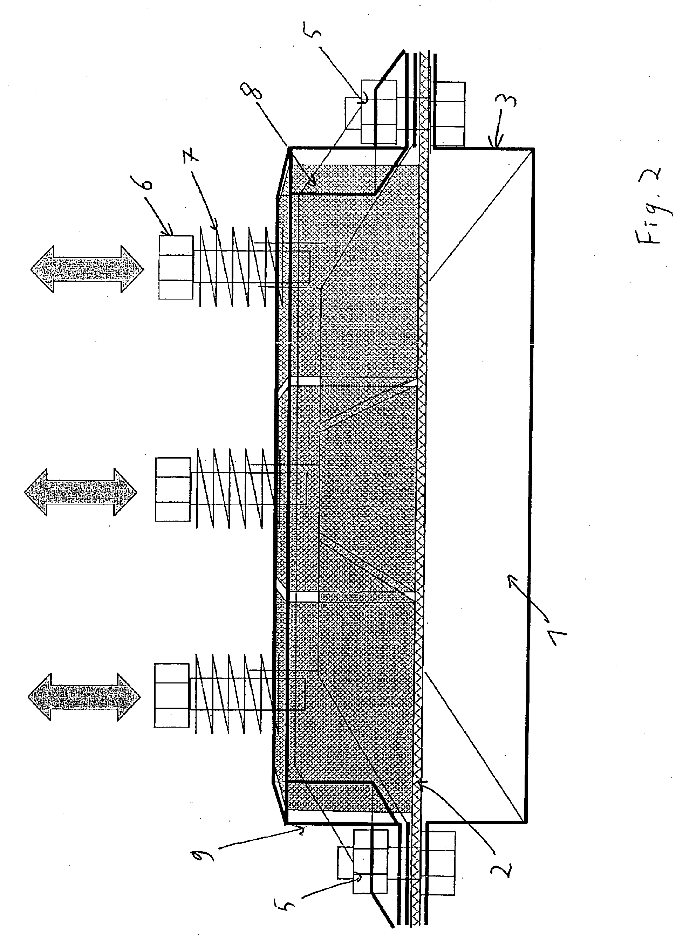

Ein erfindungsgemäßes Ausführungsbeispiel ist in Fig. 2 gezeigt. Zu erkennen ist ein Trichter 3 und eine Membran 2, die zusammen die Austrittsöffnung 1 definieren. Membran 2 und Trichter 3 sind durch Verschraubungen 5 miteinander verbunden. Ebenfalls durch diese Verschraubungen 5 gehalten wird die Brücke 9, an der die Gegendruckbleche 8 über Verstellschrauben 6 und Federn 7 befestigt sind. Die Fig. 2 zeigt die Düse in ihrer Ruheposition. In dieser Ruheposition weist die Austrittsöffnung 1 einen rechteckigen Querschnitt auf. Da die Gegendruckfläche 8 durch die Federn 7 befestigt sind, können sie sich in Richtung der darüber gezeigten Teile bewegen.

Durch Herein- oder Herausdrehen der Verstellschrauben 6 kann die Vorspannung der Federn 7 verändert werden. Damit durch das Betätigen der Verstellschrauben nicht auch die Nullstellung der Gegendruckbleche 8 verändert wird, sind die Gegendruckblechen 8 so ausgebildet, dass sie in der Nullstellung von oben auf der Brücke 9 aufliegen.

Dadurch wird auch die Bewegung der Gegendruckbleche 8 dahingehend eingeschränkt, dass sie sich nur in einer Richtung aus der Nullstellung heraus bewegen können.

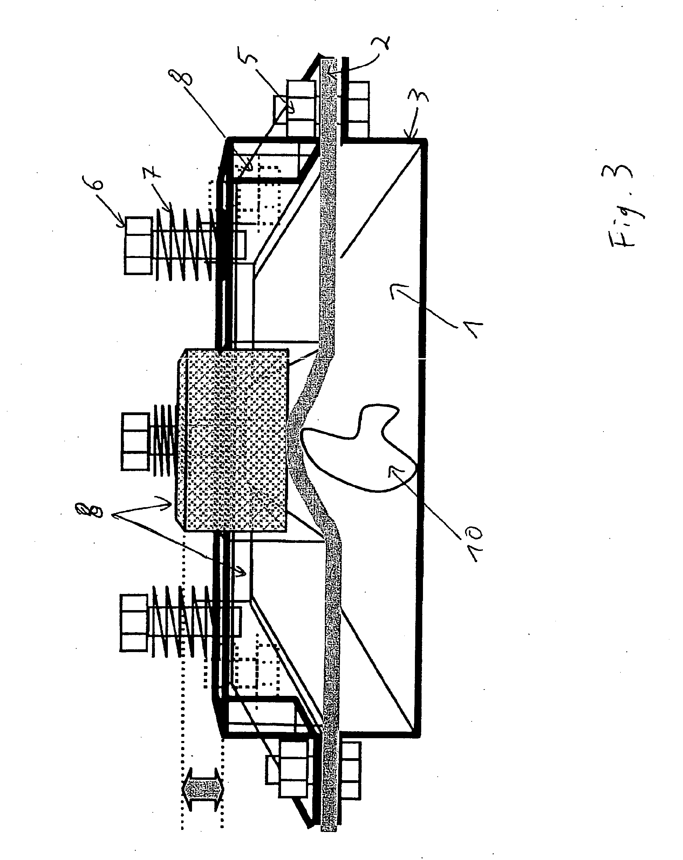

Fig. 3 zeigt die in Fig. 2 gezeigte Düse, jedoch nicht in ihrer Ruhestellung sondern bei der Passage eines Gemüsestücks 10. Eines der Gegendruckbleche 8 ist in Fig. 3 schraffiert dargestellt. Dies dient lediglich der Hervorhebung. Dieses schraffierte Gegendruckblech 8 ist durch das durchtretende Gemüsestück 10 und die dazwischen befindliche Membran 2 aus seiner Ruheposition ausgelenkt worden. Dies macht der links befindliche Pfeil deutlich.

Da die Membran 2 dehnbar ausgeführt ist, kann sie der Bewegung des Gegendruckelementes lokal folgen und für eine geschwungene Form der Austrittsöffnung 1 sorgen. In der Figur wird deutlich, dass die Rückstellkraft, die in diesem Ausführungsbeispiel über die Federn 7 erzeugt wird, auf die hindurch tretenden Lebensmittelstücke 10 abgestimmt werden muss. Ist sie zu stark gewählt, werden die Lebensmittelstücke beschädigt, da sie das Gegendruckblech 8 nicht ausreichend aus seiner Nullstellung heraus verschieben können. Ist die Rückstellkraft zu klein gewählt, kann es passieren, dass das Gegendruckelement nicht ausreichend schnell wieder zurück in seine Nullstellung bewegt wird. Dies ist insbesondere dann der Fall, wenn die Orientierung der Düse derart verändert wird, dass die Schwerkraft nicht für eine Rückstellung sorgt. In manchen Ausführungen kann jedoch auch die Schwerkraft eine ausreichende Rückstellkraft darstellen.

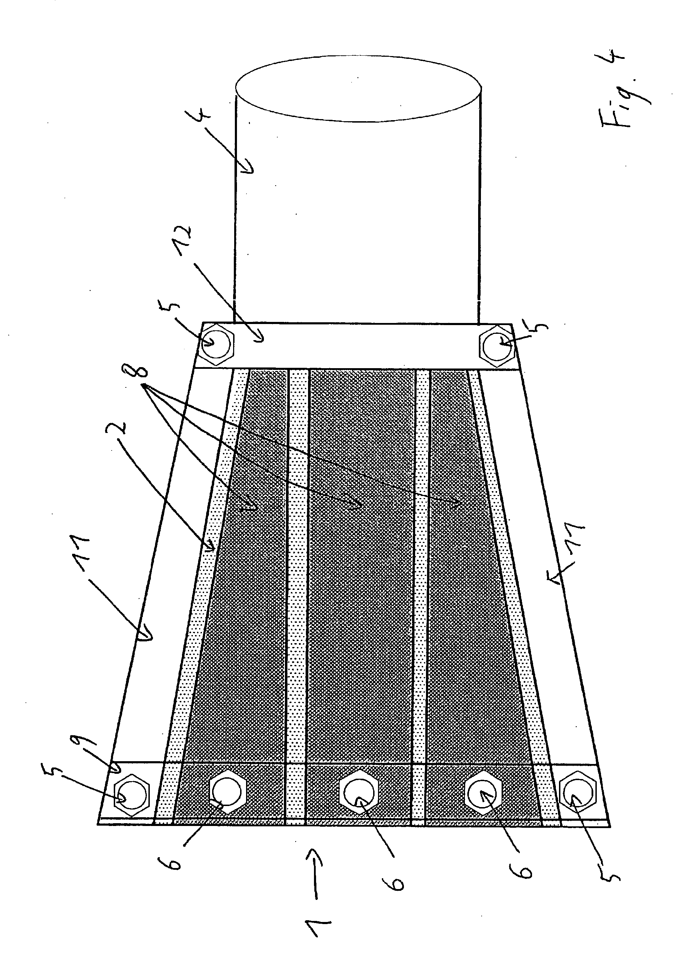

Fig. 4 zeigt die Düse aus Fig. 2 jedoch nicht in einer Ansicht frontal auf die Ausrittsöffnung 1 sondern in einer Ansicht von oben. Zu erkennen ist, dass unterhalb der Gegendruckfläche 8 eine Membran 2 verläuft.

Diese Membran 2 wird durch die Verschraubungen 5 und die Seitenbleche 11 und das hintere Blech 12 auf dem Trichter 3 befestigt. Dadurch wird auch eine Abdichtung der Düse an den Übergängen zwischen Membran 2 und Trichter 3 erreicht. Eine Größenveränderung der Austrittsöffnung 1 in ihrer Ruheposition kann beispielsweise durch Zwischenlegen von Blechen zwischen Trichter 3 und Membran 2 erfolgen.

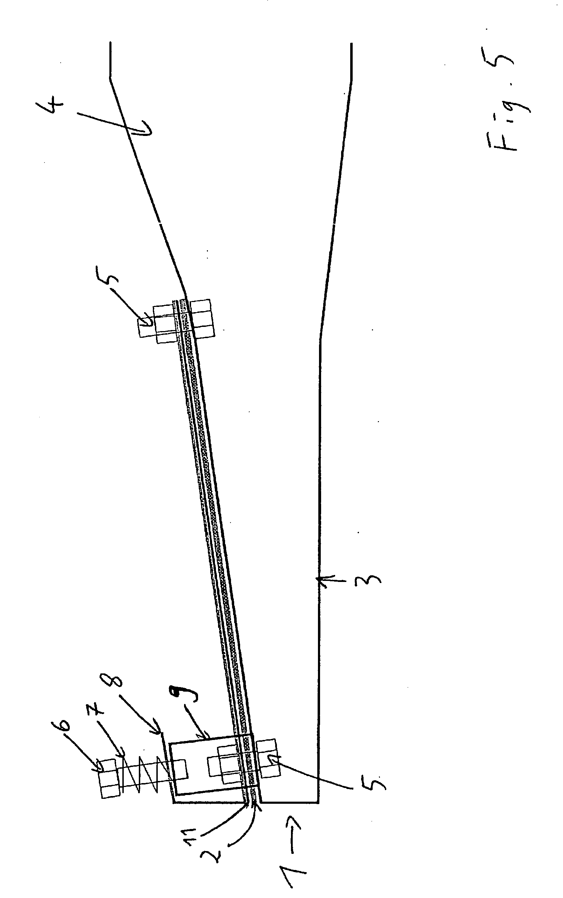

Fig. 5 zeigt eine Seitenansicht der Düse aus Fig. 2. Die Austrittsöffnung 1 befindet sich an der linken Seite. Gut zu erkennen ist hier die Form der Gegendruckbleche 8, die in der Nullstellung auf der Brücke 9 aufliegen. Auf dem Trichter 3 liegt zunächst die Membran 2 und darüber die Seitenbleche 11 auf. Diese Teile werden durch die Verschraubungen 5 zusammengehalten. Die in Richtung der Austrittsöffnung 1 befindliche Verschraubung 5 hält zusätzlich die Brücke 9. Auf der Membran 2 liegen desweiteren die Gegendruckbleche 8 auf.

Die obigen Ausführungen zeigen, dass die vorgestellte Erfindung mit zahlreichen Vorteilen behaftet ist und es mit einfachen Mitteln ermöglicht, Lebensmittelschichten auch mit stückigen Teilen über eine erfindungsgemäße Düse aufzutragen. Weitere Ausbildungen sind durch den Fachmann leicht auffindbar.

### Bezugszeichenliste

- 1: Austrittsöffnung
- 2: Membran
- 3: Trichter
- 4: Anschlussrohr
- 5: Verschraubung
- 6: Verstellschraube
- 7: Feder
- 8: Gegendruckblech
- 9: Brücke
- 10: Gemüse
- 11: Seitenblech
- 1 2: hinteres Blech

## Patentansprüche

1. Düse zum Aufbringen einer Lebensmittelschicht mit einer Austrittsöffnung (1), wobei die Austrittsöffnung (1) in ihren Abmessungen ganz, teil- oder stückweise flexibel gestaltet ist und wobei die Austrittsöffnung (1) zumindest teilweise durch eine flexible und dehnbare Membran (2) gebildet wird, **dadurch gekennzeichnet, dass** angrenzend an die Membran (2) und außerhalb der Austrittsöffnung (1) mindestens ein mit Rückstellkraft beaufschlagtes und von der Austrittsöffnung (1) aus einer Nullstellung in einer Richtung innerhalb der Ebene der Austrittsöffnung (1) weg verschiebbares Gegendruckelement (8) angeordnet ist.

2. Düse nach Anspruch 1, **dadurch gekennzeichnet, dass** das mindestens eine Gegendruckelement (8) von der Nullstellung aus nur in eine Richtung bewegbar ist.

3. Düse nach einem der Ansprüche 1 bis 2, **dadurch gekennzeichnet, dass** die Nullstellung und/oder die Rückstellkraft, mit der das mindestens eine Gegendruckelement (8) beaufschlagt ist, einstellbar sind.

4. Düse nach einem vorstehenden Ansprüche, **dadurch gekennzeichnet, dass** die Membran (2) eine Silikonmembran ist.

5. Düse nach einem der vorstehenden Ansprüche, **dadurch gekennzeichnet, dass** die Austrittsöffnung (1) in ihrer Ruhegröße und/oder ihrer Ruheform verstellbar ausgebildet ist.

6. Düse nach einem der oben stehenden Ansprüche, **dadurch gekennzeichnet, dass** die Austrittsöffnung (1) in ihrer Ruheform einen rechteckigen Querschnitt aufweist.

7. Düse nach einem der oben stehenden Ansprüche, **dadurch gekennzeichnet, dass** die Austrittsöffnung (1) einen n-eckigen Querschnitt aufweist, wobei zwischen den n Ecken, n Kanten vorhanden sind, wobei n-1 Kanten durch Kanten steifer Platten gebildet werden und die verbleibende Kante durch die Membran (2) gebildet wird.

8. Düse nach einem der Ansprüche 1 bis 5, **dadurch gekennzeichnet, dass** die Austrittsöffnung (1) einen runden oder ovalen Querschnitt aufweist, wobei ein erster Kreis- oder Ovalabschnitt des runden beziehungsweise ovalen Querschnitts durch mindestens ein steifes Element und der übrige Kreis- oder Ovalabschnitt durch die Membran (2) gebildet wird.

9. Düse nach einem der vorstehenden Ansprüche, **dadurch gekennzeichnet, dass** die Rückstellkraft und/oder Nullstellung des mindestens einen Gegendruckelements veränderbar ist.

10. Verwendung der Düse gemäß einem der oben stehenden Ansprüche zum Aufbringen einer fließfähigen Lebensmittelschicht mit stückigen Teilen (10) unterschiedlicher Größe und beliebiger Querschnittsform.

## Claims

1. A nozzle for applying a food coating with an outlet opening (1), whereas the outlet opening (1) is completely, partially or sectionally flexible in its dimensions and whereas the outlet opening (1) at least partially consists of a flexible and extensible membrane (2), **characterised in that** at least one counter-pressure element (8), which is subjected to a reset force and shiftable from the outlet opening (1) from a neutral position in a direction inside the plane of the outlet opening (1), is arranged adjoining the membrane (2) and outside the outlet opening (1).

2. The nozzle according to claim 1, **characterised in that** said at least one counter-pressure element (8) can be moved from the neutral position into one direction only.

3. The nozzle according to one of the claims 1 to 2, **characterised in that** the neutral position and/or the reset force with to said at least one counter-pressure element (8) is subjected, are adjustable.

4. The nozzle according to one of the previous claims, **characterised in that** the membrane (2) is a silicone membrane.

5. The nozzle according to one of the previous claims, **characterised in that** the outlet opening (1) is designed adjustable in its size at rest and/or its shape at rest.

6. The nozzle according to one of the previous claims, **characterised in that** the outlet opening (1) in its shape at rest has a rectangular cross-section.

7. The nozzle according to one of the previous claims, **characterised in that** the outlet opening (1) has a cross-section with n angles, whereas n sides are present between the n angles, whereas n-1 sides are formed by sides of rigid plates and the remaining side consists of the membrane (2).

8. The nozzle according to one of the claims 1 to 5, **characterised in that** the outlet opening (1) has a round or oval cross-section, whereas a first circular or oval portion of the round or oval cross-section consists of at least one rigid element and the residual circular or oval portion of the membrane (2).

9. The nozzle according to one of the previous claims, **characterised in that** the neutral position and/or the reset force of said at least one counter-pressure element are adjustable.

10. The use of a nozzle according to one of the previous claims, for applying a fluid food coating with chunky portions (10) of different size and any cross-sectional shape.

## Revendications

1. Buse permettant d'appliquer une couche d'aliments avec une ouverture de sortie (1), dans laquelle l'ouverture de sortie (1) est conçue complètement, partiellement flexible ou en tronçons au niveau de ses dimensions et dans laquelle l'ouverture de sortie (1) est constituée au moins partiellement d'une membrane (2) flexible et extensible, **caractérisée en ce qu'**au moins un élément de contre-pression (8), soumis à une force de rappel et déplaçable de l'ouverture de sortie (1) à partir d'une position neutre dans une direction interne au plan de l'ouverture de sortie (1) est limitrophe de la membrane (2) et extérieur à l'ouverture de sortie (1).

2. Buse selon la revendication 1, **caractérisée en ce que** ledit au moins une élément de contre-pression (8) est mobile à partir de la position neutre dans une seule direction.

3. Buse selon l'une des revendications 1 à 2, **caractérisée en ce que** la position neutre et/ou la force de rappel, à laquelle est soumis ledit au moins un élément de contre-pression (8), sont réglables.

4. Buse selon l'une des revendications précédentes, **caractérisée en ce que** la membrane (2) est une membrane de silicone.

5. Buse selon l'une des revendications précédentes, **caractérisée en ce que** l'ouverture de sortie (1) est conçue de manière réglable au niveau de sa dimension au repos et/ou de sa forme au repos.

6. Buse selon l'une des revendications précédentes, **caractérisée en ce que** l'ouverture de sortie (1) présente une section transversale rectangulaire dans sa forme au repos.

7. Buse selon l'une des revendications précédentes, **caractérisée en ce que** l'ouverture de sortie (1) présente une section transversale à n angles, dans laquelle n côtés sont présents entre les n angles, dans laquelle n-1 côtés sont constitués par les côtés de plaques rigides et le côté restant est constitué par la membrane (2).

8. Buse selon l'une des revendications 1 à 5, **caractérisée en ce que** l'ouverture de sortie (1) présente une section ronde ou ovale, dans laquelle une première portion circulaire ou ovale de la section transversale ronde ou ovale est consitutée d'au moins un élément rigide et le reste de la portion circulaire ou ovale par la membrane (2).

9. Buse selon l'une des revendications précédentes, **caractérisée en ce que** la position nulle et/ou la force de rappel dudit au moins un élément de contre-pression sont modifiables.

10. Utilisation de la buse selon l'une des revendications précédentes, permettant d'appliquer une couche d'aliments fluide avec des parties volumineuses (10) de différente taille et de n'importe quelle forme de section transversale.
